# EUROPEAN PATENT SPECIFICATION

(11) **EP 2 337 467 B1**
(45) Date of publication and mention of the grant of the patent: **19.07.2017**
(21) Application number: 09816996.4
(22) Date of filing: 28.09.2009
(51) Int. Cl.: A43B 9/00, A43D 8/02, A43D 11/00, A43B 23/02, A43B 23/07, B32B 5/18, B32B 7/12, B29D 35/14, B32B 27/40, B32B 37/06, A43B 3/00, A43B 23/24, A43D 25/20, B32B 37/12

(54) **SHOE WITH A FLAT FORMED SHOE UPPER**
SCHUH MIT FLACH GEFORMTEM OBERMATERIAL
CHAUSSURE À TIGE DE CHAUSSURE DE FORME PLATE

(30) Priority: 26.09.2008 US 194403 P
(43) Date of publication of application: 29.06.2011
(73) Proprietor: NIKE Innovate C.V., Beaverton, OR 97005-6453 (US)
(72) Inventor: DEAN, Anthony, Beaverton OR 97005 (US); FUSCO, Ciro, Beaverton OR 97005 (US); BEREND, Thomas, Beaverton OR 97005 (US)
(74) Representative: Beattie, Alex Thomas Stewart
(86) International application number: PCT/US2009/058623
(87) International publication number: WO 2010/037032

(56) References cited:
- EP-A1- 1 621 092
- WO-A1-00/36943
- WO-A1-90/03744
- US-A- 2 110 249
- US-A- 3 793 750
- US-A1- 2004 226 113
- US-A1- 2007 199 210
- US-A1- 2007 204 485
- US-A1- 2007 204 485
- US-A1- 2008 010 867

## Description

### TECHNICAL FIELD

The present invention relates to athletic footwear. More particularly, the present invention relates to a shoe with a flat formed shoe upper.

### BACKGROUND OF THE INVENTION

Shoes, especially shoe uppers, have traditionally been assembled from a relatively large number of three-dimensional components. Both the large number and the three-dimensional nature of these components have required a great deal of labor to assemble a single shoe. Decreasing the labor required to manufacture a shoe by a meaningful amount is not possible with standard shoe designs.

WO 90/03744 discloses Heat Embossed Shoes. A labor-saving shoe making process provides multilayered, heat embossed, shoe components including a one-piece upper. The components comprise a resilient foam layer and other layers for flexibility, strength and durability. Embossing of the shoe components serves to reduce the thickness of the material, provide sealing of the material, provide form and shape to the shoe, and allow strain control management. The connecting of shoe components is accomplished in part through the use of thermoplastic rivets which are heated and melted by the application of a high frequency field.

US 2007/019920 A1 discloses A Compression Moulded Footwear and Method of Manufacture. An article of footwear having an upper, which includes a first foam layer having a first surface and a second surface remote from the first surface, a second foam layer having a first surface and a second surface remote from the first surface, and a middle layer having a first surface and a second surface remote from the first surface. The first surface of the middle layer is affixed to the second surface of the first foam layer, and the second foam layer. The upper defines at least a portion of a foot receiving cavity for the article of footwear.

EP 1621092 A1 discloses an element of comfort for an article of clothing or footwear, manufacturing process and article comprising such an element. A method of preparing comfort element (I) comprises: super laying a primary layer (A) of material (II), a foam material layer (B) and a secondary layer (C) of (II) having melting point of theta 1, 2 and 3, respectively (where the temperature of theta2 is lower than theta1 and 3); and assembling the three layers of weld line (2) by subjecting to welding, which takes (B) to a temperature of theta4 (between theta2 and theta1) and theta3 according to (2) is disclosed.

### SUMMARY OF THE INVENTION

Aspects of the invention are set out in the accompanying claims.

The present invention relates to a shoe specifically designed to facilitate production via efficient shoe manufacturing methods and systems. These shoe designs and/or manufacturing methods reduce the specialized individual labor required for shoe production, while avoiding high costs associated with highly automated manufacturing equipment. Shoes in accordance with the present invention may further permit a customer to select a particular model of shoe, select functional options for the shoe and/or select aesthetic options for the shoe.

### BRIEF DESCRIPTION OF THE DRAWING

FIG. IA illustrates the initial layering step for upper creation, in accordance with the present invention;
FIG. 1B illustrates examples of upper components associated with the layering step depicted in FIG. 1A, in accordance with the present invention;
FIG. 2 illustrates a step for upper creation involving a heat press, in accordance with the present invention;
FIG. 3 illustrates a step for upper creation involving cutting out a pattern perimeter, in accordance with the present invention;
FIG. 4 illustrates a step for thermoforming shoe construction involving the attachment of a heel-quarter element to a tongue-toe element, in accordance with an embodiment of the present invention;
FIG. 5 illustrates a step for thermoforming shoe construction involving lasting, in accordance with an embodiment of the present invention;
FIG. 6 illustrates a step for thermoforming shoe construction involving sole laying, in accordance with an embodiment of the present invention;
FIG. 7 is a perspective view of a finished thermoform construction basketball shoe, in accordance with an embodiment of the present invention;
FIGS. 8A-C are lateral side elevational views of examples of thermoform construction basketball shoes, in accordance with an embodiment of the present invention;
FIG. 9A is a top plan view of a finished thermoform construction skate shoe, in accordance with an embodiment of the present invention;
FIG. 9B is a lateral side elevational view of a finished thermoform construction skate shoe, in accordance with an embodiment of the present invention;
FIG. 9C is a front view of a tongue associated with the skate shoe depicted in FIG. 9A, in accordance with an embodiment of the present invention; and
FIG. 9D is a profile view of a tongue associated with the skate shoe depicted in FIG. 9A, in accordance with an embodiment of the present invention.

### DETAILED DESCRIPTION OF THE INVENTION

Shoes, in accordance with the present invention, are designed to enable efficient manufacturing, and customization. Shoe model options in accordance with the present invention may include, for example, a running shoe model, a basketball shoe model, and a skate shoe model. In accordance with the present invention, upper forms of shoes may be manufactured by a flat forming construction process, whereby the upper pattern is kept in a two-dimensional shape for a substantial amount of the upper assembly and is then stitched or otherwise affixed into a three-dimensional form in the final stage of upper assembly. The flat forming process minimizes the amount of labor, such as labor intensive stitching traditionally needed to assemble a three-dimensional upper form. The upper forms are then coupled with midsole and/or outsole structures designed to permit efficient shoe production.

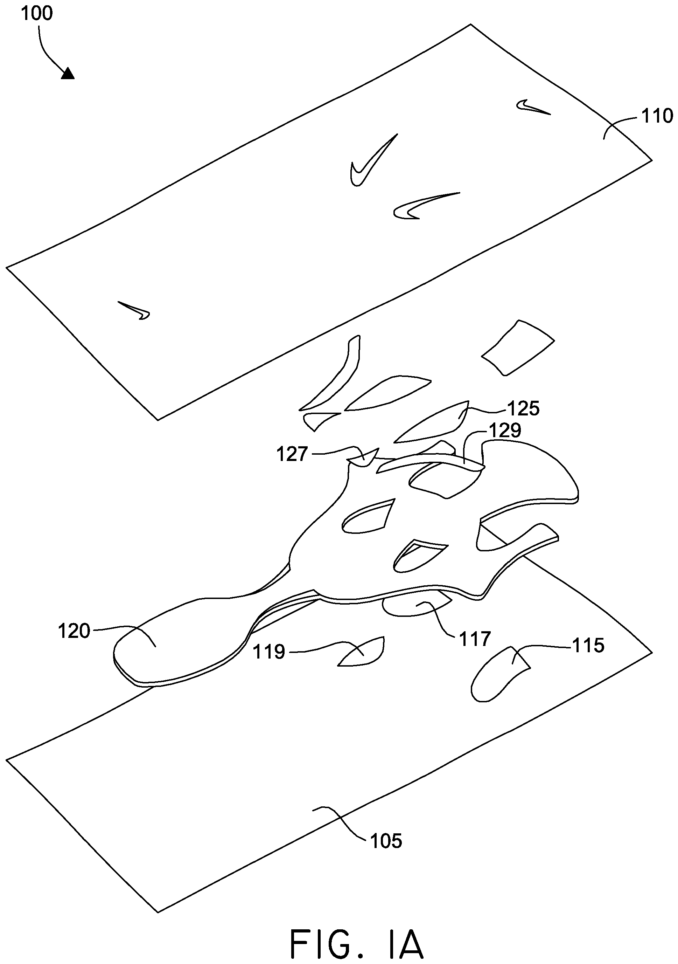

Referring now to FIG. 1A, the initial layering step 100 for upper creation, in accordance with the present invention, is illustrated. In step 100, shoe upper components (e.g., upper elements) and hot-melt films (not shown) may be cut and arranged in between a lining layer 105 and an external layer 110. The upper components layered in between lining layer 105 and external layer 110 may include: internal foams 115, 117, and 119; a lining foam 120; and reinforcement pieces 125, 127, and 129. Lining layer 105 may include a moisture-wicking textile for removing excess moisture from the area immediately surrounding the foot. Suitable materials for lining layer 105 include polyester and recycled polyester, although other types of materials, including natural materials may be used. Other suitable materials for lining layer 105 will become readily apparent to those skilled in the art, given the benefit of this disclosure.

In step 100, internal foams 115, 117, and 119 of different shapes and sizes as illustrated in FIG. 1A may be placed upon lining layer 105. Internal foams 115, 117, and 119 may be cut into shapes consistent with conventional shoe design and may include, for example, a collar, vamp, quarter, and tongue. Internal foams 115, 117, and 119 may enhance the structure and comfort of the upper and can be formed of material such as polyurethane foam.

Lining foam 120 may be layered over the internal foams 115, 117, and 119 in step 100. Lining foam 120 forms a barrier between lining layer 105 and external layer 110, and may enhance the comfort and three-dimensional form of the shoe. In alternative embodiments of the invention, lining foam 120 may be replaced by a forming foam or other reinforcement materials conventionally used in shoe upper manufacture.

In step 100, reinforcement pieces 125, 127, and 129 of different shapes and sizes as illustrated in FIG. 1A may be placed upon lining foam 120. Reinforcement pieces 125, 127, and 129 may be cut into shapes consistent with conventional shoe design and may include vamp and eyestay reinforcements. External layer 110 may be placed above the reinforcement pieces 125, 127, and 129 in step 100. External layer 110 forms the outer surface of the upper and may include textile elements for resisting abrasion and providing breathability. To enable the customer to customize the appearance of the upper, the external layer 110 may be altered by various dying, digital printing, embossing and embroidering techniques. Suitable materials for external layer 110 include synthetic leather and polyester mesh, although other materials including natural materials, may be used in accordance with the present invention. Other suitable materials for external layer 110 will become readily apparent to those skilled in the art, given the benefit of this disclosure.

In step 100, hot-melt films (not shown) are layered amongst the upper components between lining layer 105 and external layer 110. Upon heat pressing, these films act to adhesively bond the upper components between lining layer 105 and external layer 110. The hot-melt films may be composed of materials such as thermoplastic polyurethane (TPU) film. The TPU film(s) may be integral to one or more sides of the other layers, such as lining layer 105 and for external layer 110.

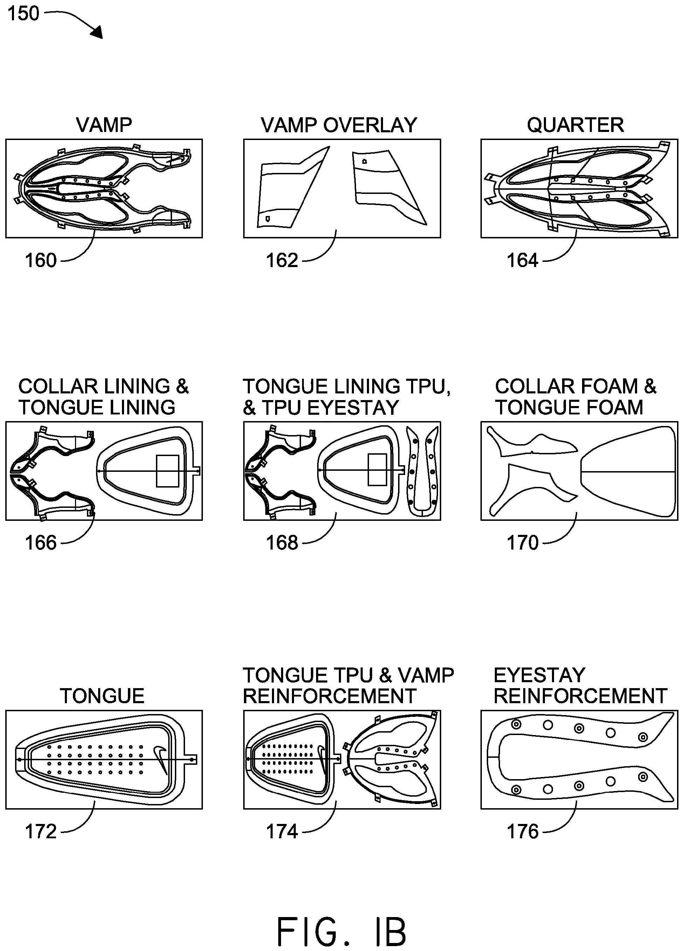

Referring now to FIG. 1B, examples of various upper components associated with step 100 are illustrated and designated generally as reference number 150. Upper components 150 may be cut into shapes consistent with conventional shoe design and may include, for example, a collar, vamp, quarter, tongue, and heel counter. Specifically, vamp 160, is a part of the shoe that covers the instep and may extend over the toe. The vamp overlay 162 may cover at least a portion of the vamp. The quarter 164 is part of the shoe's upper, and may cover the sides and back of the foot. In many cases, the quarter is attached by some means (e.g., sewn, glued) to the vamp. The collar lining and tongue lining, as shown by 166 and 168, simply provide a lining for these parts of the shoe and may be made out of a variety of materials, such as TPU, as discussed above. The eyestay shown in 168 allows for the shoe to be laced. The collar and tongue foam 170 are simply pieces of material, here foam, that are formed or placed into the collar and tongue to give these parts of the shoe shape and also to provide comfort to the wearer of the shoe. The tongue 172 is a piece of material that typically is placed in the top-center of the shoe and sits on the top part of the foot. The tongue 172 also may protect the top part of the foot. A tongue made from TPU and a vamp reinforcement 174 are also illustrated in FIG. 1B, as well as an eyestay reinforcement 176.

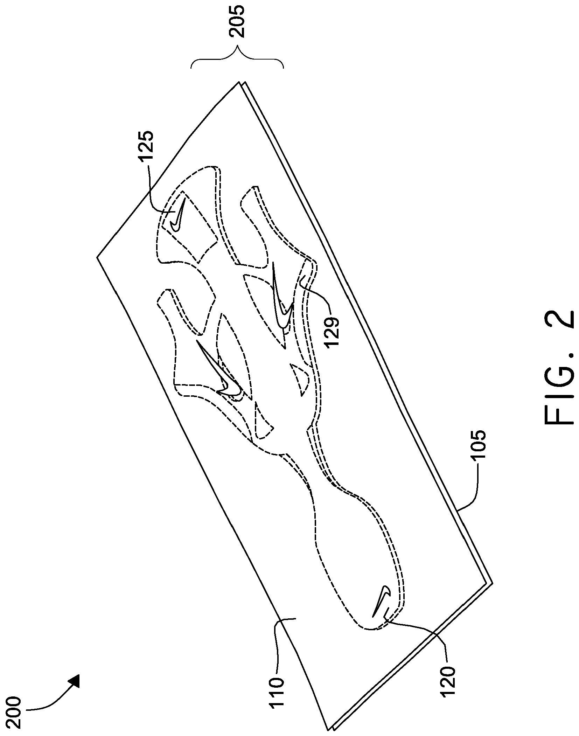

Referring now to FIG. 2, the heat press step 200 for upper creation in accordance with the present invention is illustrated. In heat press step 200, the layers from step 100 may be heat pressed together to form a basic laminated upper form, designated generally as 205. Upper form 205 is formed when the layers from step 100 are heated under pressure. The specific temperature, pressure, and time needed to laminate the upper form may vary according to the upper component being treated. For example, proper lamination of the quarter upper component may occur when treated at a pressure of 25 bars at 135 degrees Celsius for thirty seconds, and proper lamination of the tongue upper component may occur when treated at a pressure of 25 bars at 130 degrees Celsius for forty-five seconds.

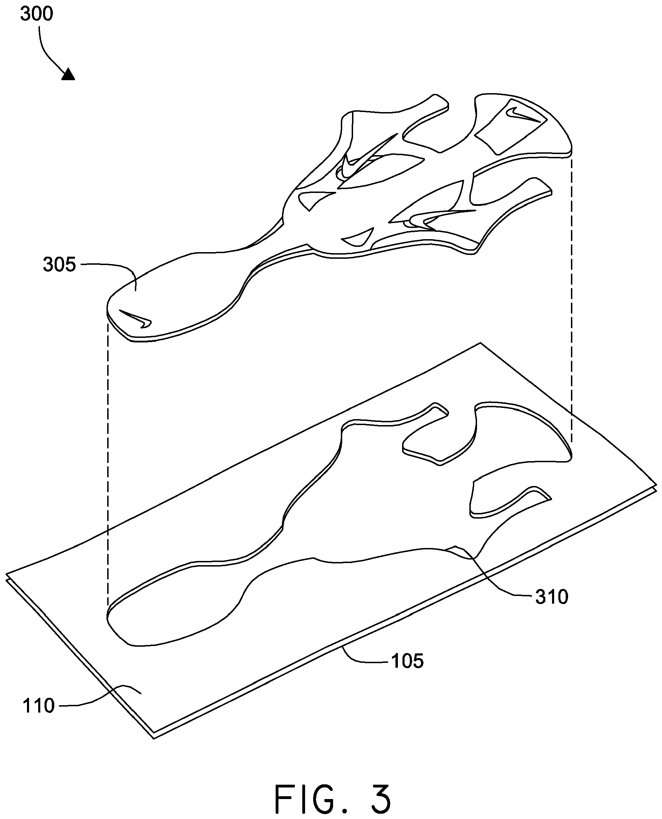

Referring now to FIG. 3, the third step 300 for upper creation in accordance with the present invention is illustrated. In step 300, the pattern perimeter 310 of basic laminated upper form 205 is cut out to form upper component 305. Step 300 may be performed using any type of cutting device such as a cutting die, shears, and the like.

As FIGS. 1-3 have not been described, a method for constructing a shoe using a flat forming process will be disclosed. The upper portion of a shoe is constructed by first layering a plurality of upper elements and hot-melt films in between a lining layer and an external layer, as shown in FIGS. 1A and 1B. These upper elements may include, for example, internal foams, a lining foam, and reinforcement pieces. In one embodiment, one or more of these upper elements are formed of polyurethane foam. The hot-melt film may be thermoplastic polyurethane, in one embodiment, but in other embodiments, may be made of another material. The upper elements and hot-melt films may be heat pressed between the lining and external layers to generate one or more basic laminated upper forms, as further shown in FIG. 2. Additionally, the pattern perimeters of the upper may be cut out of the basic laminated upper forms, shown in FIG. 3.

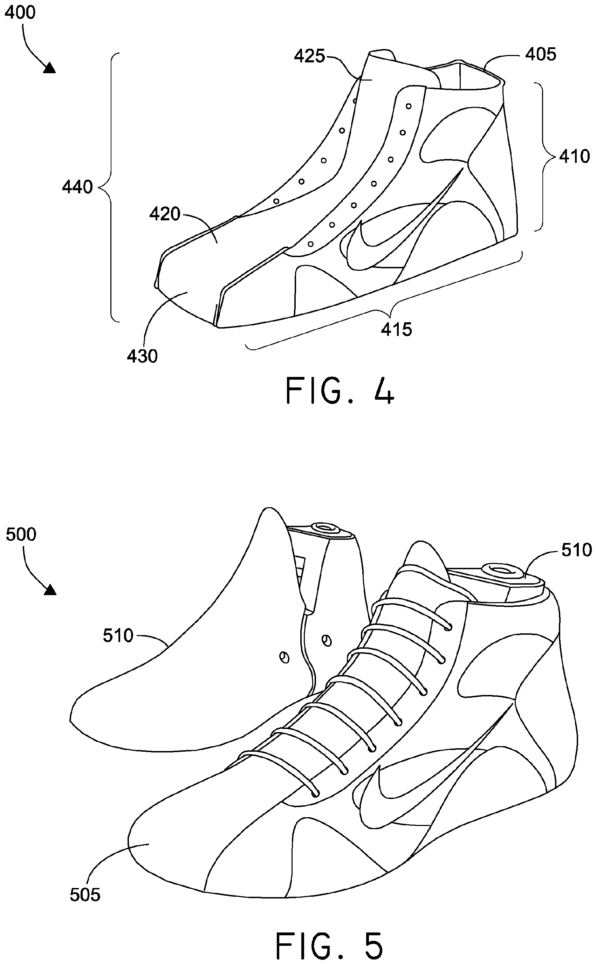

Referring now to FIG. 4, the step 400 for thermoforming shoe construction involving attachment of the heel-quarter element to a tongue-toe element in accordance with an embodiment of the present invention is illustrated. In step 400, a heel-quarter element 405 may be attached to a tongue-toe element 420 to form a three-dimensional upper form 440. Heel-quarter element 405 is a single, laminated upper component constructed according to steps 100, 200, and 300 illustrated in FIGS. 1-3.

Heel-quarter element 405 may include a heel area 410 and quarter panels 415. To properly form heel area 410, heel-quarter element 405 may be subject to thermoform heel-forming processes. The thermoform heel-forming processes may involve heat pressing the heel counter upper component, as shown in FIG. 1A, into a heel shape, then chilling the heel counter component. A dart (not shown) may be inserted at the top or bottom of heel area 410 of heel-quarter element 405 to facilitate the formation of a smooth heel. This thermoform heel-forming process may give the heel-quarter element 405 a three-dimensional shape.

Similar to the formation of heel-quarter element 405, tongue-toe element 420 may be a single piece made from steps 100-300 of FIGS. 1-3. Tongue-toe element 420 includes a tongue 425 attached to a toe-box region 430. In step 400, upper form 440 may be constructed by affixing the toe-box region 430 to the heel area 410 by, for example, stitching, gluing, RF welding, ultrasonic welding, or any other technique. Upper form 440 may then be fitted with a strobel (not shown), such as a last, for further construction and to shape the upper.

Referring now to FIG. 5, the lasting step 500 for thermoforming shoe construction in accordance with an embodiment of the present invention is illustrated. In lasting step 500, last 510 may be inserted into upper form 505 to properly shape the upper.

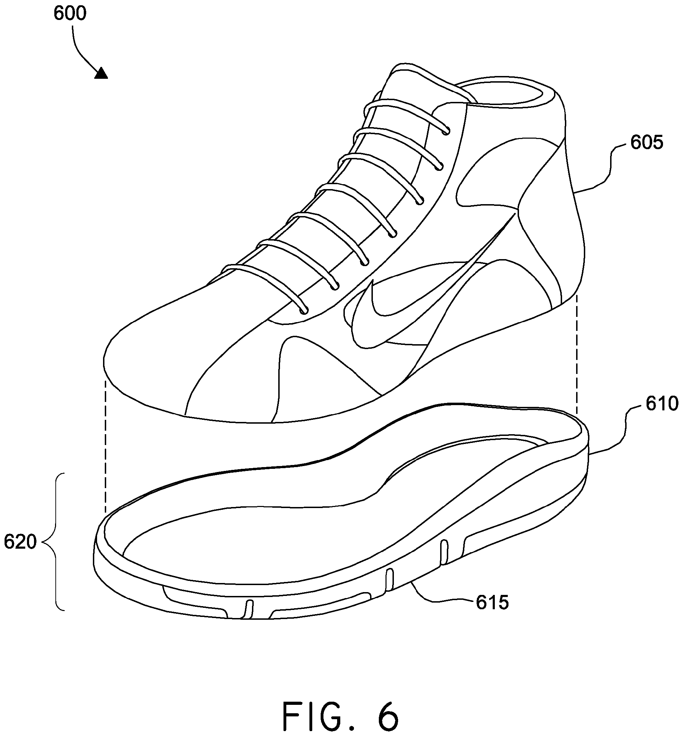

Referring now to FIG. 6, the sole laying step 600 for thermoforming shoe construction in accordance with an embodiment of the present invention is illustrated. In sole laying step 600, upper form 605 may be aligned and attached to sole unit 620. Sole unit 620 may include a phylon midsole 610, a rubber outsole 615, and a flange(s) (not shown). For example, upper form 605 may be attached to the flange of midsole 610 using conventional shoe manufacture techniques such as, for example, stitching, gluing or a combination thereof. The attachment flange may surround the entire perimeter of midsole 610, or may be at a plurality of points or regions around the perimeter of midsole 610. The flange may be of a different hardness than other portions of midsole 610. Upper form 605 may be attached to sole unit 620 by stitching, gluing, etc.

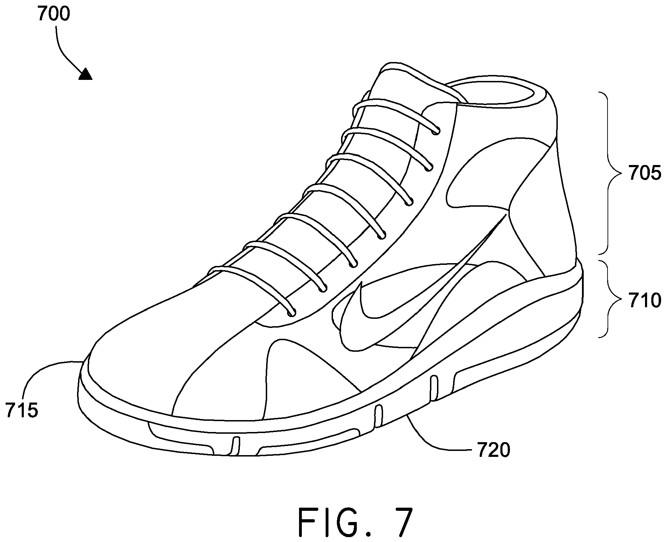

Referring now to FIG. 7, a perspective view of a finished thermoform construction basketball shoe 700 in accordance with an embodiment of the present invention is illustrated. Basketball shoe 700 includes an upper 705 attached to a sole unit 710. Sole unit 710 is comprised of phylon midsole 715 attached to an outsole 720, as further described above in the discussion of FIG. 6.

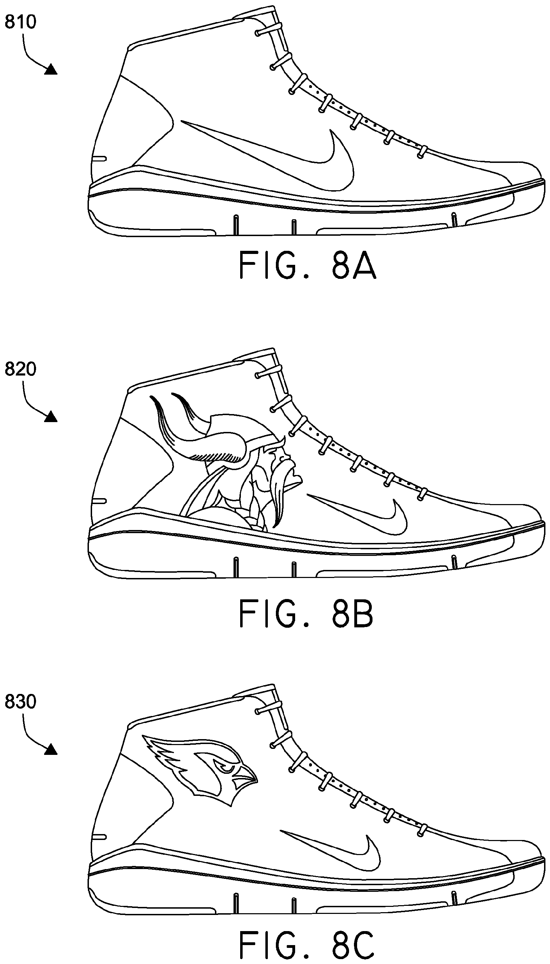

Referring now to FIGS. 8A-C, lateral side elevational views 800 of examples of thermoform construction basketball shoes in accordance with an embodiment of the present invention are illustrated and designated generally as 810, 820, and 830 respectively. FIGS. 8A-C illustrate different options available in accordance with the present invention. For example, a shoe can include a standard graphic design as depicted in FIG. 8A, or the shoe can be decorated with varsity designs as depicted in FIG. 8B-C.

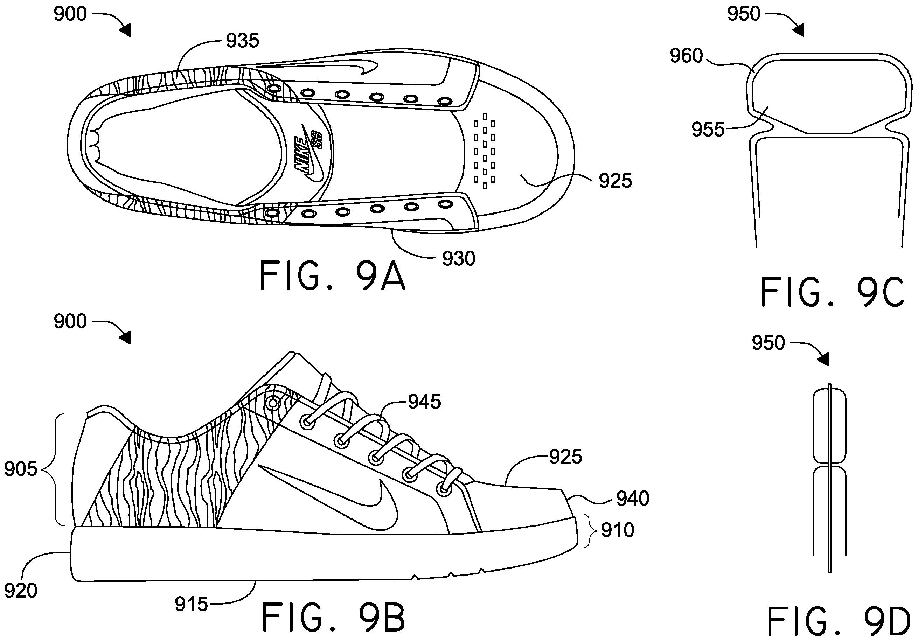

Referring now to FIGS. 9A-B, top plan and lateral side elevational views of a finished thermoform construction skate shoe in accordance with an embodiment of the present invention are illustrated and designated generally as reference numeral 900. Skate shoe 900 includes an upper 905 attached to a sole unit 910. Sole unit 910 is comprised of midsole 915 attached to an outsole 920. Skate shoe 900 may be further comprised of perforations 925 in upper 905, emboss eyelets 930, a thick foam collar 935, an overlay durable synthetic toe tip 940, and eyestay reinforcements 945.

Referring now to FIGS. 9C-D, front and profile views of a tongue associated with the skate shoe depicted in FIG. 9A are illustrated and designated generally as reference numeral 950. In one embodiment, tongue 950 may be comprised of a thick 20 mm foam. The exterior layer 955 of tongue 950 may be decorated with a debossed logo 960.

The present invention has been described in relation to particular embodiments, which are intended in all respects to be illustrative rather than restrictive. Alternative embodiments will become apparent to those of ordinary skill in the art to which the present invention pertains without departing from its scope.

From the foregoing, it will be seen that this invention is one well adapted to attain all the ends and objects set forth above, together with other advantages which are obvious and inherent to the system and method. It will be understood that certain features and sub-combinations are of utility and may be employed without reference to other features and sub-combinations. This is contemplated by and is within the scope of the claims.

## Claims

1. A method of assembling an upper of a shoe using a flat forming construction process to permit a customer to select a particular model of shoe, select functional options and/or select aesthetic options to enable the customer to customize the shoe, the method comprising: while maintaining a two-dimensional shape, layering: a lining layer (105), upper components (115,117,119,120,125,127,129) of different shapes and sizes, and an external layer (110), to form an upper of the shoe (100), wherein a size and a shape of the upper components (115,117,119,120,125,127,129) vary based on one or more of the customer selected particular model of the shoe, functional options and/or aesthetic options of the shoe, which portion of the shoe is being assembled, and a size of the shoe being assembled; adhering the lining layer (105), the upper components (115,117,119,120,125,127,129), and the external layer (110) together by way of a heat press, wherein hot-melt films are also layered in between the lining layer (105) and the external layer (110) to bond the lining layer (105) and the external layer (110) together to form a laminated upperform (205); and cutting out (300) the upper (305) of the shoe along a pattern perimeter (310) from the laminated upper form (205).

2. The method of claim 1, wherein the upper comprises upper elements (150) in the shape of one or more of a collar, a vamp (160), a quarter (164) or a tongue (172) of the shoe.

3. The method of claim 1, wherein one or more reinforcement pieces (125, 127, 129) are also layered in between the lining layer (105) and the external layer (110) to provide more support for the upper (305) of the shoe.

4. The method of claim 1, further comprising forming a three-dimensional upper (440) by affixing two or more upper elements of the shoe (400) together, wherein the two or more upper elements of the shoe include one or more of a heel-quarter element (405) or a tongue-toe element (420).

5. The method of claim 4, further comprising inserting (500) a last (510) into the three-dimensional upper (440).

6. The method of claim 5, further comprising attaching (600) the three-dimensional upper to a sole unit (620), wherein the sole unit includes a midsole (600) and an outsole (615).

7. A method of manufacturing a shoe customized to an order placed by a customer, the shoe comprising: an upper, where the upper is manufactured by a flat forming construction process according to anyone of claims 1 to 6, wherein the method generates one or more laminated upper forms (205).

8. The method of claim 7, wherein the hot-melt film is thermoplastic polyurethane (TPU).

9. The method of claim 7, wherein one or more of the upper components (115, 117, 119, 120) are formed of polyurethane foam.

10. The method of claim 7, wherein the upper components include one or more of internal foams (115, 117, 119), a lining foam (120), and reinforcement pieces (125, 127, 129).

11. The method of claim 10, wherein the internal foams are shaped consistent with various portions of the shoe, and include one or more of a collar, a vamp (160), a quarter (164), and a tongue (172) of the shoe.

12. The method of claim 10, wherein the lining foam forms a barrier between the lining layer (105) and the external layer (110) to enhance comfort and provide a three-dimensional form of the shoe.

13. The method of claim 10, wherein the reinforcement pieces include one or more of a vamp reinforcement (174) or an eyestay reinforcement (176).

14. The method of claim 7, wherein the external layer (110) is made from one or more of synthetic leather or polyester mesh.

15. The method of claim 7, wherein the external layer (110) forms an outer surface of the upper and allows for customization of an appearance of the upper in that various customization processes can be performed to the upper including one or more of dying, digital printing, embossing, or embroidering.

## Patentansprüche

1. Verfahren zum Zusammenfügen eines Obermaterials eines Schuhs anhand eines Flachformungs-Herstellungsvorgangs, um es einem Kunden zu gestatten, ein bestimmtes Schuhmodell auszuwählen, funktionelle Optionen auszuwählen und/oder ästhetische Optionen auszuwählen, damit der Kunde den Schuh individualisieren kann, wobei das Verfahren Folgendes umfasst: unter Beibehaltung einer zweidimensionalen Form, das Schichten: einer Futterschicht (105), von Obermaterialkomponenten (115, 117, 119, 120, 125, 127, 129) verschiedener Formen und Größen und einer Außenschicht (110), um ein Obermaterial des Schuhs (100) zu bilden, worin eine Größe und eine Form der Obermaterialkomponenten (115, 117, 119, 120, 125, 127, 129) je nach einem/einer oder mehreren des/der jeweils vom Kunden ausgewählten Modells des Schuhs, funktionellen Optionen und/oder ästhetischen Optionen des Schuhs, wobei dieser Abschnitt des Schuhs zusammengefügt wird, und einer Größe des zusammenzufügenden Schuhs variieren; Zusammenkleben der Futterschicht (105), der Obermaterialkomponenten (115, 117, 119, 120, 125, 127, 129) und der Außenschicht (110) mittels einer Heißpresse, worin Heißschmelzfilme ferner zwischen der Futterschicht (105) und der Außenschicht (110) geschichtet sind, um die Futterschicht (105) und die Außenschicht (110) miteinander zu verbinden, um eine laminierte Obermaterialform (205) zu bilden; und Ausschneiden (300) des Obermaterials (305) des Schuhs entlang einer Schnittkontur (310) aus der laminierten Obermaterialform (205).

2. Verfahren nach Anspruch 1, worin das Obermaterial Obermaterialelemente (150) in Form einer/eines oder mehrerer einer Manschette, eines Blatts (160), eines Quartiers (164) oder einer Zunge (172) des Schuhs umfasst.

3. Verfahren nach Anspruch 1, worin ein oder mehrere Verstärkungsstücke (125, 127, 129) ferner zwischen der Futterschicht (105) und der Außenschicht (110) geschichtet sind, um mehr Abstützung für das Obermaterial (305) des Schuhs zu bieten.

4. Verfahren nach Anspruch 1, weiter umfassend das Bilden eines dreidimensionalen Obermaterials (440) durch Aneinanderbefestigung von zwei oder mehr Obermaterialelementen des Schuhs (400), worin die zwei oder mehr Obermaterialelemente des Schuhs eines oder mehrere eines Fersenquartierelements (405) oder eines Zungen-Zehen-Elements (420) beinhalten.

5. Verfahren nach Anspruch 4, weiter umfassend das Einführen (500) einer Leiste (510) in das dreidimensionale Obermaterial (440).

6. Verfahren nach Anspruch 5, weiter umfassend das Anbringen (600) des dreidimensionalen Obermaterials an einer Sohleneinheit (620), worin die Sohleneinheit eine Mittelsohle (600) und eine Außensohle (615) beinhaltet.

7. Verfahren zum Herstellen eines gemäß einem Kundenauftrag individualisierten Schuhs, wobei der Schuh Folgendes umfasst: ein Obermaterial, wobei das Obermaterial durch einen Flachformungs-Herstellungsvorgang nach einem der Ansprüche 1 bis 6 hergestellt wird, worin das Verfahren eine oder mehrere laminierte Obermaterialformen (205) erzeugt.

8. Verfahren nach Anspruch 7, worin der Heißschmelzfilm thermoplastisches Polyurethan (TPU) ist.

9. Verfahren nach Anspruch 7, worin eine oder mehrere der Obermaterialkomponenten (115, 117, 119, 120) aus Polyurethanschaum gebildet sind.

10. Verfahren nach Anspruch 7, worin die Obermaterialkomponenten einen/ein oder mehrere von internen Schäumen (115, 117, 119), einem Futterschaum (120) und Verstärkungsstücken (125, 127, 129) beinhalten.

11. Verfahren nach Anspruch 10, worin die internen Schäume verschiedenen Teilen des Schuhs entsprechend geformt sind und eine/eines oder mehrerer einer Manschette, eines Blatts (160), eines Quartiers (164) und einer Zunge (172) des Schuhs beinhalten.

12. Verfahren nach Anspruch 10, worin der Futterschaum eine Barriere zwischen der Futterschicht (105) und der Außenschicht (110) bildet, um den Komfort zu erhöhen und eine dreidimensionale Form des Schuhs bereitzustellen.

13. Verfahren nach Anspruch 10, worin die Verstärkungsstücke eine oder mehrere einer Blattverstärkung (174) oder einer Ösenleistenverstärkung (176) beinhalten.

14. Verfahren nach Anspruch 7, worin die Außenschicht (110) aus einem oder mehreren von Kunstleder oder Polyestermesh besteht.

15. Verfahren nach Anspruch 7, worin die Außenschicht (110) eine Außenfläche des Obermaterials bildet und eine Individualisierung des Aussehens des Obermaterials erlaubt, indem verschiedene Individualisierungsvorgänge am Obermaterial durchgeführt werden können, darunter eines oder mehrere von Färben, Digitaldrucken, Prägen oder Sticken.

## Revendications

1. Un procédé d'assemblage d'une tige d'une a chaussure utilisant un processus de construction de mise en forme à plat afin de permettre à un client de sélectionner un modèle de chaussure particulier, de sélectionner des options fonctionnelles et/ou de sélectionner des options esthétiques pour permettre au client de personnaliser la chaussure, le procédé constituant à :
tout en maintenant une forme bidimensionnelle, disposer : une couche de doublure (105), des composants de la tige (115,117,119,120,125,127,129) de différentes formes et dimensions et une couche extérieure (110) pour mettre en forme une tige de la chaussure (100), dans lequel les dimensions et la forme des composants de la tige (115,117,119,120,125,127,129) varient sur la base d'un ou plusieurs modèles de chaussure particuliers sélectionnés par le client, des options fonctionnelles et/ou des options esthétiques de la chaussure, de la partie de la chaussure qui est assemblée et des dimensions de la chaussure qui est assemblée ;
faire adhérer ensemble la couche de doublure (105), les composants de la tige (115,117,119,120,125,127,129) et la couche extérieure (110) au moyen d'une presse à chaud, dans lequel des films thermofusibles sont aussi disposés entre la couche de doublure (105) et la couche extérieure (110) pour coller ensemble la couche de doublure (105) et la couche extérieure (110) pour mettre en forme une forme de tige stratifiée (205) ; et
découper (300) la tige (305) de la chaussure le long d'un périmètre de motif (310) dans la forme de tige stratifiée (205).

2. Le procédé selon la revendication 1, dans lequel la tige comprend des éléments de la tige (150) ayant pour forme un ou plusieurs éléments parmi une claque (160), un quartier (164) ou une langue (172) de la chaussure.

3. Le procédé selon la revendication 1, dans lequel une ou plusieurs pièces de renfort (125,127, 129) sont aussi disposées entre la couche de doublure (105) et la couche extérieure (110) pour fournir plus de support à la tige (305) de la chaussure.

4. Le procédé selon la revendication 1, constituant en outre à mettre en forme une tige tridimensionnelle (440) en fixant ensemble deux ou plus de deux éléments de la tige de la chaussure (400), dans lequel les deux ou plus de deux éléments de la tige de la chaussure incluent un ou plusieurs éléments parmi un élément talon-quartier (405) et un élément langue-orteil (420).

5. Le procédé selon la revendication 4, constituant en outre à introduire (500) un embauchoir (510) dans la tige tridimensionnelle (440).

6. Le procédé selon la revendication 5, constituant en outre à assujettir (600) la tige tridimensionnelle à une unité de semelle (620), dans lequel l'unité de semelle inclut une semelle intercalaire (600) et une semelle extérieure (615).

7. Un procédé de fabrication d'une chaussure personnalisée selon une commande passée par un client, la chaussure comprenant : une tige, où la tige est fabriquée selon un processus de construction de mise en forme à plat selon l'une quelconque des revendications 1 à 6, dans lequel le procédé génère une ou plusieurs formes de tiges stratifiées (205).

8. Le procédé selon la revendication 7, dans lequel le film thermofusible est un polyuréthane thermoplastique (TPU).

9. Le procédé selon la revendication 7, dans lequel un ou plusieurs des composants de la tige (115, 117, 119, 120) sont formés de mousse de polyuréthane.

10. Le procédé selon la revendication 7, dans lequel les composants de la tige incluent une ou plusieurs mousses intérieures (115, 117, 119), une mousse de doublure (120) et des pièces de renfort (125, 127, 129).

11. Le procédé selon la revendication 10, dans lequel les mousses intérieures sont d'une forme correspondant à diverses parties de la chaussure, et incluent un ou plusieurs éléments parmi un collet, une claque (160), un quartier (164) et une langue (172) de la chaussure.

12. Le procédé selon la revendication 10, dans lequel la mousse de doublure forme une barrière entre la couche de doublure (105) et la couche extérieure (110) pour améliorer le confort et fournir une forme tridimensionnelle de la chaussure.

13. Le procédé selon la revendication 10, dans lequel les pièces de renfort incluent un ou plusieurs renforts parmi un renfort de claque (174) et un renfort d'oeillet (176).

14. Le procédé selon la revendication 7, dans lequel la couche extérieure (110) est fabriquée dans un ou plusieurs composants parmi le cuir synthétique et la maille de polyester.

15. Le procédé selon la revendication 7, dans lequel la couche extérieure (110) forme une surface extérieure de la tige et permet la personnalisation d'un aspect de la tige en ce que divers processus de personnalisation peuvent être effectués sur la tige incluant un ou plusieurs processus parmi la teinture, l'impression numérique, le gaufrage et la broderie.
